# EUROPÄISCHE PATENTSCHRIFT

(11) **EP 0 758 587 B1**
(45) Veröffentlichungstag und Bekanntmachung des Hinweises auf die Patenterteilung: **15.09.1999**
(21) Anmeldenummer: 96105204.0
(22) Anmeldetag: 01.04.1996
(51) Int. Cl.: B42D 15/10

(54) **Verfahren zur Herstellung teilmetallisierter Gitterstrukturen**
Method for fabricating partially metallized grid structrures
Méthode pour la fabrication des structures de grille partiellement métallisées

(30) Priorität: 10.08.1995 CH 229995
(43) Veröffentlichungstag der Anmeldung: 19.02.1997
(73) Patentinhaber: Electrowatt Technology Innovation AG, 6301 Zug (CH)
(72) Erfinder: Ohannes, Minnetian, 6274 Eschenbach (CH); Beat, Nauer, 8840 Einsiedeln (CH)

(56) Entgegenhaltungen:
- EP-A- 0 372 274
- EP-A- 0 537 439
- US-A- 4 662 653

## Beschreibung

Die Erfindung bezieht sich auf ein Verfahren zur Herstellung teilmetallisierter Flächenmuster bestehend Flächen mit reflektierenden, lichtbeugenden Gitterstrukturen und transparenten Teilflächen gemäss dem Oberbegriff der Ansprüche 1 und 2.

Solche teilmetallisierte Flächenmuster enthalten Reliefstrukturen mit lichtbeugenden Eigenschaften, wie Hologramme, aus Flächenelementen mit Beugungsgittern zusammengesetzte, zweidimensionale Bilder usw., und werden zur Erhöhung der Fälschungssicherheit von Banknoten, Dokumenten und Waren aller Art verwendet.

Teilmetallisierte Flächenmuster sind aus der CH-PS 670'904 bekannt. Die lichtbeugende Reliefstruktur ist in einem mehrschichtigen Dokument eingebettet. Zwei Schutzschichten schliessen die lichtbeugenden Reliefstrukturen ein, wobei in vorbestimmten Teilflächen eine optisch aktive Zwischenschicht die Grenzfläche zwischen den beiden Schutzschichten bildet. Die Teilflächen sind durch Flächen ohne die Zwischenschicht getrennt, in denen die beiden Schutzschichten miteinander direkt verbunden sind. In den Brücken weist die Verbindung zwischen den beiden Schutzschichten eine besonders gute Haftung auf. Das Dokument ist an den nicht mit der optisch aktiven Zwischenschicht bedeckten Teilflächen bei transparenten Schutzschichten durchsichtig. Zum Herstellen wird eine Kunststoffolie mit den eingeprägten, lichtbeugenden Reliefstrukturen in den von der optisch aktiven Zwischenschicht freizuhaltenden Flächen mit einer abwaschbaren Schicht bedruckt. Die optisch aktive Zwischenschicht wird auf die bedruckten und unbedruckten Teilflächen der Kunststoffolie aufgebracht. Ein Waschprozess entfernt die abwaschbare Schicht und die auf ihr haftende Zwischenschicht. Nach dem Trocknen wird die zweite Schutzschicht aufgetragen . Die bedeckt daher nur die lichtbeugenden Reliefstrukturen. Nur in den vorbestimmten Teilflächen mit der optisch aktiven Zwischenschicht bewirken die Reliefstrukturen das typische brillante Farbenspiel der Beugung von weissem Licht, während an den Reliefstrukturen in den Flächen ohne die optisch aktive Zwischenschicht keine Beugungseffekte zu beobachten sind.

Aus der britischen Anmeldung GB-A 2136352 ist bekannt, die Kunststofffolie mit der lichtbeugenden Reliefstruktur zu prägen und vollflächig mit der reflektierenden Zwischenschicht zu bedecken. Anschliessend werden die für das Beugen von Licht vorbestimmten Flächen mit einer Schutzmaske bedruckt und die freiliegende Zwischenschicht mittels eines Aetzmittels entfernt, um das teilmetallisierte Flächenmuster zu erhalten.

Aus der US-PS 3'647'508 sind Rezepturen für drucktechnisch auf eine aufgedampfte Metallschicht aufzutragende Aetzmittel bekannt, die einen Kunststoff-Träger nicht angreifen.

Die europäische Patentanmeldung EP - 201 323 A2 enthält eine Zusammenstellung von fast allen Kunststoffen und Materialien für eine Reflexionsschicht, die für die Herstellung von Kunststofflaminaten mit beugungsoptischen Reliefstrukturen verwendet werden können.

Der Erfindung liegt die Aufgabe zugrunde, ein einfacheres und kostengünstigeres Verfahren zur Herstellung von teilmetallisierten Flächenmustern der eingangs genannten Art zu schaffen.

Die genannte Aufgabe wird erfindungsgemäss durch die im Kennzeichen der Ansprüche 1 und 2 angegeben Merkmale gelöst. Vorteilhafte Ausgestaltungen der Erfindung ergeben sich aus den abhängigen Ansprüchen.

Ausführungsbeispiele der Erfindung werden anhand der Zeichnungen dargestellt und näher beschrieben.

Es zeigen
Figur 1: eine Basisfolie,
Figur 2: Aufdruck eines Aetzmittels auf die Basisfolie,
Figur 3: die Basisfolie nach dem Aetzen,
Figur 4: Ansicht der geprägten Basisfolie nach dem Aetzen,
Figur 5: eine Produktionsstrasse,
Figur 6: ein Kunststofflaminat im Querschnitt und
Figur 7: ein Sicherheitselement auf einem Dokument.

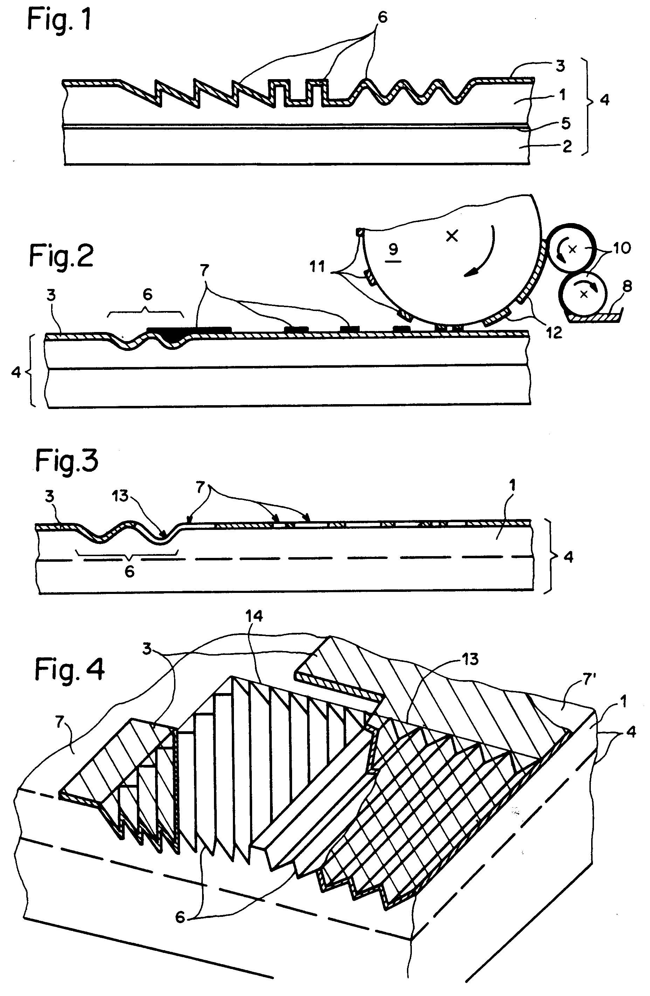

In der Figur 1 bedeutet 1 eine transparente Lackschicht, 2 eine mit der transparenten Lackschicht 1 beschichtete Trägerfolie 2. Die freie Oberfläche der Lackschicht 1 kann mit einer Reflexionsschicht 3 überzogen sein. Im Handel sind solche beschichteten Trägerfolien 2 als bandförmiges Basisfolie 4 auf Rollen in verschiedenen Breiten mit oder ohne Reflexionsschicht 3 erhältlich.

Für den Schichtaufbau der Basisfolie 4 für die Herstellung von Sicherheitselementen mit optischen Beugungselementen sind viele Varianten bekannt. Die Basisfolie 4 umfasst die Trägerfolie 2, beispielsweise ein 10 bis 50 Mikrometer dickes Polyesterband, die Lackschicht 1, die als Acryllack 1 bis 10 Mikrometer, vorzugsweise aber 1 bis 3 Mikrometer, dick aufgetragen ist, und eine Zwischenschicht 5 von 0,1 bis 0,4 Mikrometer Dicke, die zwischen der Trägerfolie 2 und der Lackschicht 1 angeordnet ist. Die Trägerfolie 2 verleiht der Lackschicht 1 die für die weiteren Herstellungsschritte notwendige mechanische Festigkeit. Bei Ausweis- und Wertkarten kann die Trägerfolie 2 direkt als Kartenbasis dienen, wobei die Dicke der Trägerfolie 2 im Bereich von 0,1 mm bis 1 mm oder mehr liegt.

Besteht die Zwischenschicht 5 aus einer wachsartigen Substanz, wirkt die Zwischenschicht 5 als Trennschicht. Unter Anwendung von Wärme löst sich die Trägerfolie 2 leicht von der Lackschicht 1. Soll hingegen die Trägerfolie 2 auch nach dem Herstellungsprozess als transparenter Schutz untrennbar mit der Lackschicht 1 verbunden bleiben, besteht die Zwischenschicht 5 aus einem sogenannten Haftvermittler (="primer"), der z. B. ein auf Polyurethanbasis aufgebauter Lack ist. Die Trägerfolie 2 kann auch durch eine Koronaentladung so vorbehandelt werden, dass die Lackschicht 1 auf der Trägerfolie 2 selbst gut haftet. In diesem Fall erübrigt sich die Zwischenschicht 5.

Die Reflexionsschicht 3 besteht entweder aus metallischem oder dielektrischem Material. Mit Vorteil wird vorallem Aluminium für die Reflexionsschicht 3 verwendet, da es eine sehr hohe optische Reflektivität aufweist und einen kostengünstigen Herstellprozess ermöglicht. Für besondere optische Farbeffekte sind auch andere in der eingangs genannten EP - 201 323 A2 aufgeführte metallische oder dielektrische Materialien, insbesondere aber die Metalle, wie Chrom, Eisen, Gold, Kupfer, Magnesium, Nickel, Silber usw., verwendbar.

Die vorgefertigten Basisfolien 4 weisen mit Vorteil bereits die Reflexionsschicht 3 auf, deren Dicke je nach Material zwischen 1 nm und 50 nm beträgt. Durch die freie Oberfläche dieser sehr dünnen Reflexionsschicht 3 hindurch werden mikroskopisch feine Reliefstrukturen 6 von einer hier nicht gezeigten Matrize mit dem Negativ der Reliefstrukturen 6 in die Lackschicht 1 abgeformt. Die Reliefstrukturen 6 sind Hologramme oder graphisch zusammengesetzte Flächenelemente mit beugungsaktiven mikroskopisch feinen Reliefstrukturen, die sich in Linienabstand, Azimut und Profilform, den Gitterparametern, unterscheiden. Die Gitterparameter bestimmen die optischen Eigenschaften der Reliefstruktur 6. Nach dem Abformen weist die Basisfolie 4 auf der Lackschicht 1 ein Reliefmuster aus den Reliefstrukturen 6 auf. Das Reliefmuster erzeugt bei der Beleuchtung ein zweidimensionales flächiges Bild, das aus Flächenelementen mit unterschiedlichen Gitterparametern zusammengesetzt ist. Einige der Flächenelemente des Reliefmusters weisen eine völlig ebene, spiegelglatte oder eine matte, lichtstreuende Struktur als extreme Reliefstruktur 6 auf. Das Reliefmuster ist aus graphischen Flächenelementen oder aus Pixeln (= Bildpunkten) aufgebaut und daher charakteristisch in eine Vielzahl von Flächenelementen unterteilt. Die Reliefmuster bilden auf der Basisfolie 4 eine regelmässige Anordnung, z. B. mehrere Reliefmuster in einer Reihe quer über das Band, die sich in einem vorbestimmten Registerabstand in der Bandlaufrichtung wiederholt. Die Höhenunterschiede der Reliefstrukturen 6 sind von der ihnen vorbestimmten Beugungseigenschaft abhängig und sind klein im Vergleich zur Dicke der Lackschicht 1. Beispielweise betragen die maximalen Höhenunterschiede etwa 400 nm bei einer Auftragsstärke der Lackschicht 1 von 1000 nm. Wie in der EP-392'085 A1 beschrieben, werden mit Vorteil gleichzeitig mit dem Abformen der Reliefmuster auf die Basisfolie 4 in Längsrichtung Ausrichthilfen in periodischen Abständen mitgeprägt, die mit den in der Drucktechnik üblichen Marken zum registergenauen Ausrichten aufeinanderfolgender Verarbeitungsprozesse vergleichbar sind. Die Basisfolie 4 mit den nun abgeformten Reliefstrukturen 6 kann wiederum aufgerollt zwischengelagert werden.

In der Figur 2 ist die Entfernung der Reflexionsschicht 3 in vorbestimmten Teilflächen 7 als nächste Stufe der Weiterverarbeitung gezeigt. Die Teilflächen 7 werden daher trotz der Reliefstruktur 6 wieder transparent und es treten an diesen Stellen keine oder wesentlich lichtschwächere Beugungeffekte als ausserhalb dieser Teilflächen 7 auf.

Mittels einem der bekannten Druckverfahren wird in den Teilflächen 7 ein Aetzmittel 8 auf die Reflexionschicht 3 aufgetragen, beispielsweise mit einem Rotationsdruckwerk 9, 10 mit einem Druckzylinder 9 und Auftragswalzen 10 oder auch mit einem kostengünstigen Tintenstrahldrucker oder mit Siebdruck. Die Teilflächen 7 bilden ein Druckbild, das aus geometrischen Flächenelementen, graphischen Symbolen, alphanumerischen Zeichen oder Rasterbildern bestehen kann. Die Teilflächen 7 des Druckbilds können an sich unabhängig von den Flächenelementen des Reliefmuster aus den Reliefstrukturen 6 gewählt werden. Das Druckbild und das Reliefmuster bilden zusammen ein visuell wahrnehmbares Bild oder Flächenmuster des Sicherheitselements. Die Zentren des Druckbilds und des Reliefmuster fallen mit Vorteil zusammen und weisen den gleichen Registerabstand auf. Durch Kombination verschiedener Druckbilder mit dem gleichen Reliefmuster können unter Verwendung der gleichen, im Vergleich zum Druckstock teuren Matrize mit dem Negativ der Reliefstrukturen 6 kostengünstig Sicherheitselemente mit unterschiedlichen wahrnehmbaren Flächenmustern erzeugt werden. Der Flächenanteil der Teilflächen 7 im Bereich des Reliefmusters wird durch den Grad der gewünschten Transparenz bestimmt.

Für Aluminium eignen sich saure und alkalische Aetzmittel, wobei befriedigende Resultate mit NaOH oder KHO erzielt werden.

Im gezeigten Beispiel trägt der Druckzylinder 9 einen Druckstock, der als eine erhabene, dem Druckbild entsprechende Mesastruktur 11 ausgebildet ist. Wie im Buchdruck die Farbe, wird in diesem Druckwerk 9, 10 das Aetzmittel 8 von den Walzen 10 auf die Mesastruktur 11 als Schicht 12 aufgetragen. Beim Abrollen des Druckzylinders 9 werden die Schichten 12 des Aetzmittels 8 in den Teilflächen 7 auf die Reflexionsschicht 3 übertragen. Das Aetzmittel 8 wird, falls notwendig, mit einem Dickungsmittel, wie Mehl bzw. Kleister, hydrophobierte Kieselsäure, Aerosil, und andere Zuschlagstoffe auf die für den Druck geeignete Konsistenz eingestellt, wie dies in der eingangs erwähnten US-PS 3'647'508 beschrieben ist. Die Mesastruktur 11 des Druckmusters wird mit jeder Umdrehung des Druckzylinders 9 auf der Basisfolie 4 abgerollt und das Aetzmittel 8 im Register zu den eingeprägten Reliefstrukturen 6 im Durchlaufverfahren aufgetragen.

Das Aetzmittel 8 auf den Teilflächen 7 reagiert mit dem Material der Reflexionsschicht 3 und löst diese chemisch auf. Da die Reflexionsschicht 3 meist weniger als 50 nm dick ist, erfolgt die Auflösung des reflektierenden Materials sehr schnell und bevor das Aetzmittel über die Grenzen der Teilflächen 7 hinausdringt. Ein anschliessender Reinigungsprozess entfernt die Rückstände des Aetzprozesses, so dass die Teilflächen 7 völlig frei von der Reflexionsschicht 3 sind. Die Reflexionsschicht 3 bildet ausserhalb der Teilflächen 7 des Druckbilds scharf berandete Inseln, die mit der in der in der Drucktechnik üblichen hohen Genauigkeit (etwa 0,05 mm) auf der geprägten Basisfolie 4 angeordnet sind.

Für die Freiätzung der Teilflächen 7 ist es unerheblich, ob die Basisfolie 4 bereits geprägt ist oder nicht, da die geringen Höhenunterschiede von weniger als einem Mikrometer innerhalb der Reliefstruktur 6 beim Auftragen der Schicht 12 mit Aetzmittel 8 verfüllt werden. Die Reflexionsschicht 3 wird somit auch in der Tiefen des Reliefs sicher entfernt. In der Figur 2 ist auf der linken Seite eine teilweise mit Aetzmittel 8 bedruckte Reliefstruktur 6 und auf der rechten Seite der Zeichnung das Aufdrucken auf eine ungeprägte Partie der Basisfolie 4 dargestellt.

Die Figur 3 zeigt die Basisfolie 4 der Figur 2 nach dem Aetz- und Reinigungsprozess. Die schraffiert gezeichnete Reflexionsschicht 3 weist nach dem Aetzen in den Teilflächen 7 Vertiefungen auf, in denen die Oberfläche der Lackschicht 1 freigelegt ist.

Bei einem anderen Verfahren erfolgt zuerst das Bedrucken der noch nicht geprägten Basisfolie 4 mit dem Aetzmittel 8 (Figur 2) ähnlich wie aus der US-PS 3'647'508 bekannt ist. Anschliessend an den Reinigungsprozess wird im Register zu den ausgeätzten Teilflächen 7 die Reliefstrukturen 6 eingeprägt, wobei sowohl in den Teilflächen 7 als auch in Gebieten mit der Reflexionsschicht 3 die Reliefstruktuen 6 eingeprägt werden.

Bei einem weiteren Verfahren erfolgt das Abformen der Matrize mit dem Negativ der Reliefstrukturen 6 während des Auftragens der Lackschicht 1 auf die Trägerfolie 2. Das Aushärten des flüssigen Lacks für die Lackschicht 1 wird mittels ultraviolettem Licht ausgelöst, wobei die Matrize in die aushärtende und noch weiche Lackschicht 1 abgeformt wird. Anschliessend wird die Reflexionsschicht 3 auf die ausgehärtete Lackschicht 1 aufgebracht und die Basisfolie aufgerollt. Die Weiterverarbeitung erfolgt wie oben beschrieben durch Aufdrucken und Abwaschen des Aetzmittels 8.

Man erhält nach den Verfahren auf der einen Oberfläche der Basisfolie 4 eine Struktur, die in der Zeichnung der Figur 4 ausschnittsweise in Ansicht gezeigt ist. Gebiete 13 und 14 weisen Reliefstrukturen 6 auf, die sich in Profil, Gitterabstand und Azimuth unterscheiden. Die Reflexionsschicht 3 ist in den Teilflächen 7; 7' entfernt und die Oberfläche der Lackschicht 1 liegt frei. Aus zeichnerischen Gründen ist die Oberfläche der Reflexionsschicht 3 leicht schraffiert. Die ungeprägten, mit der Reflexionsschicht 3 bedeckten glatten Flächenteile wirken als Spiegel.

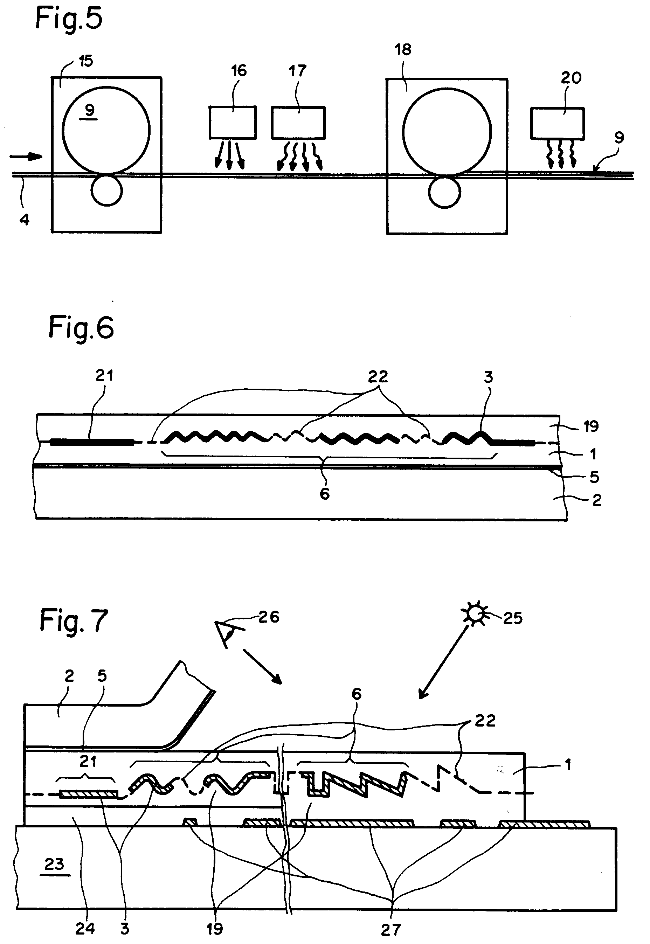

Bei einer Vorrichtung zur Durchführung des Verfahrens wird die Basisfolie 4 in der Zeichnung der Figur 5 von links nach rechts bewegt. Die Basisfolie 4 wird im Druckwerk 15 mittels des Druckzylinders 9 mit dem Aetzmittel 8 (Figur 2) auf der Seite der Reflexionsschicht 3 (Figur 2) bedruckt. Anschliessend gelangt die Basisfolie 4 in der für den Aetzprozess optimalen Zeit in eine Reinigungsanlage 16, in der beispielsweise mit aufgesprühtem Wasser das überschüssige Aetzmittel 8 mit dem gelösten Material der Reflexionsschicht 3 von der Basisfolie gespühlt wird. Das auf der Oberfläche der Basisfolie 4 verbleibende Wasser wird in einem Trockner 17 zum Verdunsten gebracht, so dass die Basisfolie 4 völlig trocken in ein Auftragswerk 18 gelangt, wo mittels einer Walze eine Schutzschicht 19 von 1 µm bis 10 µm Stärke vollflächig auf die Seite mit der geätzten Reflexionsschicht 3 der Basisfolie 4 aufgetragen wird. Das Material der Schutzschicht 19 kann ein mittels Ultraviolettlicht aushärtbarer Lack oder ein konventionell trocknender Lack mit einem Lösungsmittel sein. Die Ausgestaltung der Einrichtung 20 hängt daher von Material der Schutzschicht 19 ab. Im ersten Fall umfasst die Einrichtung 20 Ultraviolettstrahler zur Initialisierung der Aushärtung oder, im zweiten Fall, erzeugt sie Wärmeenergie zum beschleunigten Abdunsten des Lösungsmittels.

Anstelle der in der Figur 5 gezeigten Verarbeitungsstrasse kann die geätzte Basisfolie 4 nach dem Verlassen des Trockners 17 aufgerollt werden. Zu einem späteren Zeitpunkt wird die geätzte Basisfolie 4 von der Rolle dem Auftragswerk 18 zugeführt und die Schutzschicht 19 aufgebracht und getrocknet.

In der Figur 6 ist die ausserhalb der Teilflächen 7 (Figur 3) verbliebene Reflexionsschicht 3 und in den Teilflächen 7 die freie Oberfläche der Lackschicht 1 der Basisfolie 4 (Figur 4) vollflächig mit der Schutzschicht 19 zum Schutz der Reflexionsschicht 3 über den Reliefstrukturen 6 und über anderen Strukturen 21 überzogen. Mit dem Auftragen der Schutzschicht 19 werden die Reflexionsschicht 3 mit den Reliefstrukturen 6 bzw. mit den Strukturen 21 in ein Kunststofflaminat 1, 19 eingebettet, aus dem die Sicherheitselemente hergestellt werden. Im allgemeinen ist die Haftung zwischen der Lackschicht 1 und der Schutzschicht 19 in den Teilflächen 7 wesentlich höher als die Haftung zwischen der Lackschicht 1 bzw. der Schutzschicht 19 und der Reflexionsschicht 3. Die Schutzschicht 19 ist daher ohne Zerstörung der Reliefstrukturen 6 in den benachbarten Gebieten nicht mehr entfernbar. In Uebereinstimmung mit der bereits eingangs erwähnten CH-PS 670'904 sind die durch die Lackschicht 1 und die Schutzschicht 19 gebildeten Grenzflächen als Haftbrücken 22 bezeichnet.

Mit Vorteil weist die Schutzschicht 19 den gleichen Brechungsindex wie die Lackschicht 1 auf, da die nicht von der Reflexionschicht 3 bedeckten Reliefstrukturen 6 oder die glatten freiliegenden Oberflächen der Lackschicht 1 nach dem Auftrag der Schutzschicht 19 unsichtbar werden. Es bildet sich keine optisch wirksame Grenzfläche zwischen der Lackschicht 1 und der Schutzschicht 19 aus. Daher wird in den Haftbrücken 22 kein Licht in Richtung des Betrachters gebeugt bzw. gespiegelt. In der Zeichnung ist aus darstellerischen Gründen der Uebergang zwischen der Lackschicht 1 und der Schutzschicht 19 gestrichelt gezeichnet.

Die für Lacke verwendbare transparente Materialien weisen nur eine Differenz der Brechungsindices von höchstens etwa 0,4 auf. Beträgt diese Differenz mehr als 0,1 treten in den Haftbrücken 22 an der Grenzfläche zwischen der Lackschicht 1 und der Schutzschicht 19 Reflexionen auf, die unter einem bestimmten Blickwinkel für das Auge gerade noch sichtbar sind und die aber die Transparenz nicht stören. Beträgt diese Differenz weniger als 0,1 ist die Intensität des reflektierten oder gebeugten Lichts zu gering, um Reflexionen oder Beugungseffekte von blossem Auge wahrnehmen zu können.

Die Schutzschicht 19 besteht bei einer ersten Ausführung aus einem konventionell trocknenden Kleber und ist zum Verbinden der Basisfolie 4 mit der Oberfläche eines Gegenstands ausgebildet. Die Dicke der Kleberschicht richtet sich nach der Oberflächenstruktur der zu beklebenden Fläche. In einer zweiten Ausführung wird zunächst ein nichtklebender Schutzlack, beispielsweise der gleiche Lack wie für die Lackschicht 1, aufgetragen und die Klebeschicht als äusserste Schicht in einer zweiten, hier nicht gezeigten Anordnung aufgebracht, die aus dem zweiten Auftragswerk 18 (Figur 5) und der zweiten Trocknungseinrichtung 20 (Figur 5) besteht. Mit Kleber sind die bekannten Heisskleber und Kaltkleber gemeint.

Dient die Trägerfolie 2 als Basis für die Wert- oder Kreditkarte, wird für die Zwischenschicht 5 der Haftvermittler und für die Schutzschicht 19 der nichtklebende transparente Schutzlack verwendet. In dieser dritten Ausführung ist das Reliefmuster der Reliefstrukturen 6 sowohl durch die Schutzschicht 19 als auch durch die Kartenbasis sichtbar, wenn sie transparent sind, ein für die graphische Gestaltung nicht zu unterschätzender Vorteil dieses Verfahrens. Die Weiterverarbeitung zu Wert- oder Kreditkarten umfasst eventuell konventionelles Bedrucken, ein Freischneiden aus dem Band und das Verpacken.

Falls auf der zum Aufkleben geeigneten Basisfolie 4 mit der Schutzschicht 19 mehrere Sicherheitselemente nebeneinander angeordnet sind, wird die Basisfolie 4 zunächst längsweise auf die Breite eines Sicherheitselementes geschnitten und aufgerollt. Jede dieser Rollen weist viele dieser hintereinander angeordneten Sicherheitselemente auf.

Das nach den beschriebenen Verfahren erzeugte Sicherheitselement ist in der Figur 7 auf einen Gegenstand 23 aufgeklebt. Auf der linken Seite der Zeichnung ist die Schutzschicht 19 mit einer Kleberschicht 24 überzogen, während auf der rechten Seite der Zeichnung die Schutzschicht 19 selbst aus einem Klebematerial besteht. Nachdem das Sicherheitselement aufdem Gegenstand 23 haftet, kann die Trägerfolie 2 abgezogen werden, wenn die Zwischenschicht 5 als Trennschicht ausgebildet ist.

Das aus dem Druckbild und aus dem Reliefmuster gebildete Flächenmuster des Sicherheitselements weist im Kunststofflaminat 1, 19 als optische Markierungen eingebettete Bereiche mit der Reflexionsschicht 3 über den Reliefstrukturen 6 und den streuenden oder spiegelnden Strukturen 21 sowie die transparenten Haftbrücken 22 auf. Das Flächenmuster ist mit Vorteil mit einer zusammenhängenden Haftbrücke 22 umgeben, um die Reflexionschicht 3 vor Korrosion und anderen Umgebungseinflüssen zu schützen. Das Flächenmuster wird von einer Lichtquelle 25 beleuchtet und von einem Beobachter 26 mit dem unbewaffneten Auge betrachtet. Das Sicherheitselement ist teiltransparent, das heisst es ist in den Haftbrücken 22 völlig transparent und in den den Haftbrücken 22 benachbarten und mit der Reflexionsschicht 3 bedeckten Bereichen undurchsichtig, da die Reflexionsschicht 3 das einfallende Licht, direkt oder gebeugt, reflektiert. Durch die transparenten Haftbrücken 22 hindurch sind für den Beobachter 26 die Schrift- und Druckbilder, Photographien oder allgemein eine Strukturierung 27 der Oberfläche des Gegenstands 23 unter dem Sicherheitselement sichtbar. Die verschiedenen, das Licht beugenden, streuenden oder reflektierenden Flächenelemente des Flächenmusters sind auch bei schlechter Beleuchtung mit grosser Lichtintensität sichtbar, während in den transparenten Haftbrücken 22 infolge einer allfällig vorhandenen Aenderung des Brechungsindex auftretende Beugungen und Reflexionen auch unter guten Betrachtungsbedingungen nur sehr lichtschwache Effekte zu beobachten sind, die das Erkennen der Strukturierung 27 auf dem Gegenstand 23 nicht stören.

Die optisch wirksamen Flächenelemente sind beispielsweise Linien, Guillochen, Punkte, Mikroschriften, Vielecke usw., aus denen sich das Flächenmuster zusammensetzt. Der Betrachter des Flächenmusters erblickt in Abhängigkeit von der Beleuchtungsrichtung und der Orientierung des Sicherheitselementes das wahrnehmbare Bild, eine farbige Darstellung, die sich vorbestimmt ändert, wenn durch Drehen oder Kippen des Sicherheitselementes die Beleuchtungsrichtung und die Beobachtungsrichtung verändert werden, weil die Bereiche mit der Reflexionsschicht 3 das einfallende weisse Licht in vorbestimmte Richtungen beugen, reflektieren oder streuen. Der Beobachter sieht beim Drehen oder Kippen des Sicherheitselementes neben der Strukturierung 27 zusätzlich das Flächenmuster, das sich abhängig von der augenblicklichen Beleuchtungs - und Betrachtungsrichtung im Gegensatz zur Strukturierung 27 in Farbe, Grösse und Form ändert.

## Patentansprüche

1. Verfahren zum Herstellen eines teiltransparenten Sicherheitselements mit einem visuell erkennbaren Flächenmuster aus beugungsoptisch wirksamen optischen Markierungen mit nichtzusammenhängenden Reflexionsschichten (3) und transparenten Haftbrücken (22) eingebettet in ein Kunststofflaminat (1, 19),
dadurch gekennzeichnet,
dass in eine eine Lackschicht aufweisende Basisfolie (4) mikroskopisch feine Reliefstrukturen (6) abgeformt werden,
dass die derart strukturierte Lackschicht (1) der Basisfolie (4) vollflächig mit der Reflexionsschicht (3) überzogen wird,
dass ein Aetzmittel (8) in einem vorbestimmten Druckbild aus Teilflächen (7) drucktechnisch auf die Reflexionschicht (3) aufgebracht wird,
dass die Reflexionsschicht (3) durch das Aetzmittel (8) in den Teilflächen (7) entfernt und die Oberfläche der Lackschicht (1) freigelegt wird, und
dass zur Bildung des Kunststofflaminats (1, 19) die Lackschicht (1) in den Teilflächen (7) und die verbleibenden Flächen der Reflexionsschicht (3) mit wenigstens einer transparenten Schutzschicht (19) überzogen werden, wobei in den Teilflächen (7) aus der direkten Verbindung der Lackschicht (1) mit der Schutzschicht (19) die transparenten Haftbrücken (21) entstehen.

2. Verfahren zum Herstellen eines teiltransparenten Sicherheitselements mit einem visuell erkennbaren Flächenmuster aus beugungsoptisch wirksamen optischen Markierungen mit nichtzusammenhängenden Reflexionsschichten (3) und transparenten Haftbrücken (22) eingebettet in ein Kunststofflaminat (1, 19),
dadurch gekennzeichnet,
dass eine eine Lackschicht aufweisende, mit der Reflexionsschicht (3) überzogene Basisfolie (4) mit den mikroskopisch feinen Reliefstrukturen (6) beprägt wird
dass ein Aetzmittel (8) in einem vorbestimmten Druckbild aus Teilflächen (7) drucktechnisch aufdie Reflexionschicht (3) aufgebracht wird,
dass die Reflexionsschicht (3) durch das Aetzmittel (8) in den Teilflächen (7) entfernt und die Oberfläche der Lackschicht (1) freigelegt wird, und
dass zur Bildung des Kunststofflaminats (1, 19) die Lackschicht (1) in den Teilflächen (7) und die verbleibenden Flächen der Reflexionsschicht (3) mit wenigstens einer transparenten Schutzschicht (19) überzogen werden, wobei in den Teilflächen (7) aus der direkten Verbindung der Lackschicht (1) mit der Schutzschicht (19) die transparenten Haftbrücken (21) entstehen.

3. Verfahren nach Anspruch 1 oder 2, dadurch gekennzeichnet, dass wenigstens zwei, sich in den Gitterparametern unterscheidende Reliefstrukturen (6) in die Lackschicht (1) abgeformt wird.

4. Verfahren nach Anspruch 3, dadurch gekennzeichnet, dass das Druckbild aus den Teilflächen (7) im Register zum Flächenmuster aus den optischen Markierungen erzeugt wird.

5. Verfahren nach Anspruch 4, dadurch gekennzeichnet, dass um das Flächenmuster eine zusammenhängenden Haftbrücke (22) zum Schutz der Reflexionschicht (3) vor Korrosion erzeugt wird.

6. Verfahren nach einem der Ansprüche 1 bis 5, dadurch gekennzeichnet, dass zwischen der Lackschicht (1) und einer Trägerfolie (2) der Basisfolie (4) eine Haftvermittlerschicht (5) aufgtragen wird und dass für die Trägerfolie (2) eine transparente Folie verwendet wird, so dass die optischen Markierungen sowohl durch die Schutzschicht (19) als auch durch die Trägerfolie (2) sichtbar sind.

7. Verfahren nach einem der Ansprüche 1 bis 6, dadurch gekennzeichnet, dass für die Schutzschicht (19) ein Material verwendet wird, das sich im Brechungsindex um höchstens 0,1 vom Material der Lackschicht (1) unterscheidet.

8. Verfahren nach einem der Ansprüche 1 bis 7, dadurch gekennzeichnet, dass für die Schutzschicht (19) das gleiche Material wie für die Lackschicht (1) aufgetragen wird.

9. Verfahren nach einem der Ansprüche 1 bis 8, dadurch gekennzeichnet, dass Aluminium als Reflexionsschicht (3) und ein alkalisches Aetzmittel (8) verwendet wird.

## Claims

1. A process for producing a partially transparent security element with a visually discernible surface pattern comprising diffraction-optically effective optical markings with non-continuous reflection layers (3) and transparent adhesive bridges (22) embedded into a plastics laminate (1, 19),
characterised in that
microscopically fine relief structures (6) are shaped in a base foil (4) having a lacquer layer,
the lacquer layer (1) of the base foil (4), which layer is structured in that way, is covered over its full surface area with the reflection layer (3),
an etching agent (8) is applied to the reflection layer (3) by a printing procedure in a predetermined printed image comprising surface portions (7),
the reflection layer (3) is removed by the etching agent (8) in the surface portions (7) and the surface of the lacquer layer (1) is exposed, and
to form the plastics laminate (1, 19) the lacquer layer (1) in the surface portions (7) and the remaining surfaces of the reflection layer (3) are covered with at least one transparent protective layer (19), the transparent adhesive bridges (21) being produced in the surface portions (7) from the direct connection of the lacquer layer (1) to the protective layer (19).

2. A process for producing a partially transparent security element with a visually discernible surface pattern comprising diffraction-optically effective optical markings with non-continuous reflection layers (3) and transparent adhesive bridges (22) embedded into a plastic laminate (1, 19),
characterised in that
a base foil (4) which has a lacquer layer and which is covered with the reflection layer (3) is embossed with the microscopically fine relief structures (6),
an etching agent (8) is applied to the reflection layer (3) by a printing procedure in a predetermined printed image comprising surface portions (7),
the reflection layer (3) is removed by the etching agent (8) in the surface portions (7) and the surface of the lacquer layer (1) is exposed, and to form the plastics laminate (1, 19) the lacquer layer (1) in the
surface portions (7) and the remaining surfaces of the reflection layer (3) are covered with at least one transparent protective layer (19), the transparent adhesive bridges (21) being produced in the surface portions (7) from the direct connection of the lacquer layer (1) to the protective layer (19).

3. A process according to claim 1 or claim 2 characterised in that at least two relief structures (6) which differ in respect of the grating parameters are shaped in the lacquer layer (1).

4. A process according to claim 3 characterised in that the printed image comprising the surface portions (7) is produced in register relationship with the surface pattern comprising the optical markings.

5. A process according to claim 4 characterised in that a continuous adhesive bridge (22) is produced around the surface pattern to protect the reflection layer (3) from corrosion.

6. A process according to one of claims 1 to 5 characterised in that a primer layer (5) is applied between the lacquer layer (1) and a carrier foil (2) of the base foil (4) and that a transparent foil is used for the carrier foil (2) so that the optical markings are visible both through the protective layer (19) and also through the carrier foil (2).

7. A process according to one of claims 1 to 6 characterised in that the material used for the protective layer (19) is a material which differs in terms of refractive index by at most 0.1 from the material of the lacquer layer (1).

8. A process according to one of claims 1 to 7 characterised in that for the protective layer (19) the same material as for the lacquer layer (1) is applied.

9. A process according to one of claims 1 to 8 characterised in that aluminium is used as the reflection layer (3) and an alkaline etching agent (8) is used.

## Revendications

1. Procédé de fabrication d'un élément de sécurité partiellement transparent comportant une forme de surface visuellement reconnaissable d'après des repères optiques efficaces diffringents, comprenant des couches réflectrices (3) non contiguës et des ponts d'adhérence transparents (22) enrobés dans une matière plastique laminée (1, 19),
caractérisé
- en ce que des structures en relief (6) microscopiquement fines sont formées dans une feuille de base (4) présentant une couche de vernis,
- en ce que la couche de vernis (1) de la feuille de base (4) ainsi structurée est recouverte sur toute sa surface par la couche réflectrice (3),
- en ce que, dans une image d'impression prédéterminée se composant de surfaces partielles (7), un réactif d'attaque chimique (8) est appliqué sur la couche réflectrice (3) selon la technique d'impression,
- en ce que la couche réflectrice (3) est enlevée dans les surfaces partielles (7) par le réactif d'attaque chimique (8) et en ce que la surface de la couche de vernis (1) est mise à nu, et
- en ce que, pour constituer la matière plastique laminée (1, 19), la couche de vernis (1) appliquée sur les surfaces partielles (7) et les surfaces résiduelles de la couche réflectrice (3) sont recouvertes par au moins une couche de protection transparente (19) où, dans les surfaces partielles (7), les ponts d'adhérence (22) transparents résultent de la jonction directe de la couche de vernis (1) et de la couche de protection (19).

2. Procédé de fabrication d'un élément de sécurité partiellement transparent comportant une forme de surface visuellement reconnaissable d'après des repères optiques efficaces diffringents, comprenant des couches réflectrices (3) non contiguës et des ponts d'adhérence transparents (22) enrobés dans une matière plastique laminée (1, 19),
caractérisé
- en ce qu'une feuille de base (4) présentant une couche de vernis et recouverte de la couche réflectrice (3) est incrustée avec des structures en relief (6) microscopiquement fines,
- en ce que, dans une image d'impression prédéterminée se composant de surfaces partielles (7), un réactif d'attaque chimique (8) est appliqué sur la couche réflectrice (3) selon la technique d'impression,
- en ce que la couche réflectrice (3) est enlevée dans les surfaces partielles (7) par le réactif d'attaque chimique (8) et en ce que la surface de la couche de vernis (1) est mise à nu, et
- en ce que, pour constituer la matière plastique laminée (1, 19), la couche de vernis (1) appliquée sur les surfaces partielles (7) et les surfaces résiduelles de la couche réflectrice (3) sont recouvertes par au moins une couche de protection transparente (19) où, dans les surfaces partielles (7), les ponts d'adhérence (22) transparents résultent de la jonction directe de la couche de vernis (1) et de la couche de protection (19).

3. Procédé selon la revendication 1 ou 2, caractérisé en ce qu'au moins deux structures en relief (6), se différenciant par les paramètres réticulaires, sont formées dans la couche de vernis (1).

4. Procédé selon la revendication 3, caractérisé en ce que l'image d'impression, se composant des surfaces partielles (7), est produite dans le registre de la forme de surface d'après des repères optiques.

5. Procédé selon la revendication 4, caractérisé en ce que un pont d'adhérence (22) contigu entourant la forme de surface est produit pour protéger la couche réflectrice (3) contre la corrosion.

6. Procédé selon l'une quelconque des revendications 1 à 5, caractérisé en ce qu'une couche (5) d'un primaire d'accrochage est appliquée entre la couche de vernis (1) et une feuille support (2) de la feuille de base (4), et en ce que l'on utilise une feuille transparente pour la feuille support (2), de sorte que les repères optiques sont visibles aussi bien à travers la couche de protection (19) qu'à travers la feuille support (2).

7. Procédé selon l'une quelconque des revendications 1 à 6, caractérisé en ce que l'on utilise pour la couche de protection (19), un matériau qui diffère, concernant l'indice de réfraction, au maximum de 0,1 par rapport au matériau de la couche de vernis (1).

8. Procédé selon l'une quelconque des revendications 1 à 7, caractérisé en ce que l'on applique pour la couche de protection (19), le même matériau que pour la couche de vernis (1).

9. Procédé selon l'une quelconque des revendications 1 à 8, caractérisé en ce que l'on utilise de l'aluminium servant de couche réflectrice (3) et un réactif d'attaque chimique (8) alcalin.
